Europäisches Patentamt

European Patent Office

Office européen des brevets

(11) Publication number: **0 266 556**
**A2**

(12) # EUROPEAN PATENT APPLICATION

(21) Application number: **87114290.7**

(51) Int. Cl.⁴: **H02K 17/36**

(22) Date of filing: **07.04.83**

(43) Date of publication of application:
**11.05.88 Bulletin 88/19**

(60) Publication number of the earlier application in
accordance with Art.76 EPC: **0 121 584**

(84) Designated Contracting States:
**AT BE CH DE FR GB IT LI LU NL SE**

(71) Applicant: **ENERGIA ANDINA LTDA.**
**Calle 22C, No. 30-49**
**Bogota(CO)**

(72) Inventor: **Miller, Jorge**
**Calle 22C No. 30-49**
**Bogotá(CO)**

(74) Representative: **Patentanwälte Grünecker,**
**Kinkeldey, Stockmair & Partner**
**Maximilianstrasse 58**
**D-8000 München 22(DE)**

(54) **A rotating electric machine for use as a motor.**

(57) The present invention relates to a rotating electric machine having two stators (1, 13) and two rotors (5, 9). The rotors are fixed to each other for rotation about a common axes. The rotors are cross-connected.

A rotating electric machine of the above-mentioned type for use as a motor having a controllable rotational speed is characterised in that the $n^{th}$ rotor winding (7, 8) of the first rotor (5) is connected to the $(N + 2 - i)^{th}$ rotor winding (12, 9) of the second rotor (9) and is further characterised by means for regulating the speed of rotation of the exciting rotary current flowing in the second rotor.

FIG. 1

EP 0 266 556 A2

## A ROTATING ELECTRIC MACHINE FOR USE AS A MOTOR

The present invention relates to a rotating electric machine for use as a motor in accordance with the prior art portion of claim 1.

EP-A1-0 028 468 already discloses a rotating electric machine having all features indicated in the prior art portion of claim 1. This prior art electric machine only serves for use as a generator.

In view of this state of the art, the present invention is based on the technical task of providing a rotating electric machine of the type mentioned hereinbefore, which can be used as a motor having an adjustable speed of rotation of the rotors.

This task is solved by a rotating electric machine of the above-mentioned type having the features indicated in the characterising portion of claim 1.

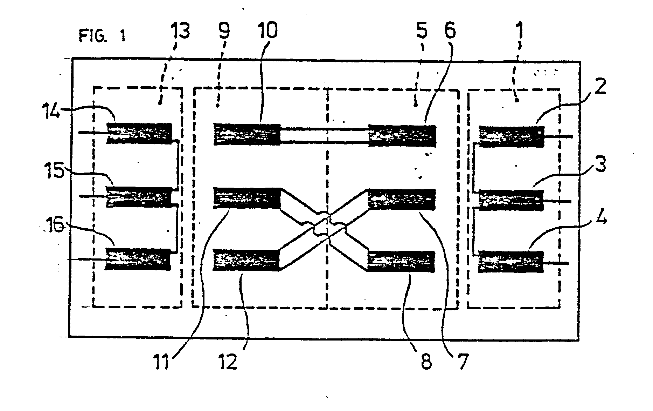

One embodiment of the rotating electric machine according to the invention will be described hereinafter on the basis of the drawing, in which:

The only Fig. is a schematic representation of the winding arrangement.

The special case (N = 3) shown in the Figure will be the most common form of application, since this is the conventional three-phase rotary current system. A first stator 1 has provided thereon three stator windings 2, 3, 4 disposed on a circle round an axis and offset by 120° with respect to one another. A rotor 5, which is adapted to be rotated about the axis, is disposed opposite the stator. Said rotor has provided thereon three rotor windings 6, 7, 8 which are disposed on a circle round the axis thereof and offset by 120° with respect to one another and which are used for exciting a magnetic field. A second rotor 9 is fixedly connected to said first rotor 5 and rotates at the speed of rotation of said first rotor 5 about the axis thereof. The connection between the two rotors 5, 9 can be effected by an axis by means of which the rotors 5, 9 are supported. The second rotor 9 has provided thereon three rotor windings 10, 11, 12 disposed on a circle round the axis and offset by 120° with respect to one another. The first rotor winding 6 of the first rotor 5 is connected to the first rotor winding 10 of the second rotor 9. The second rotor winding 7 of the first rotor 5 is connected to the third rotor winding 12 of the second rotor 9. The third rotor winding 8 of the first rotor 5 is connected to the second rotor winding 11 of the second rotor 9. A second stator 13 is disposed opposite the second rotor 9. Said second stator 13 has provided thereon three stator windings 14, 15, 16 disposed on a circle round the axis and offset by 120° with respect to one another.

Normally, in the case of synchronous motors the difficulty occurs that a starting motor is required for starting these machines, since latching or synchronizing of the motor speed is only possible when the motor rotates at approximately the same rotational speed as the rotary magnetic field generated by the rotary current flowing in the windings 2, 3, 4 of the first stator 1. The structural design of a motor disclosed in claim 4 eliminates the necessity of providing a starting motor as well as the problem of synchronous latching of the motor. In view of the fact that the rotational speed results from half the sum of the rotational speeds of the rotary fields generated by the currents in the windings 6, 7, 8; 14, 15, 16 of the stators 1, 13, the starting operation can, e.g., simply be effected by employing the measure that, at first, the field at the second stator 13 rotates at the same, but oppositely directed rotational speed as the field at the first stator 1. In response to a slow change in the rotational speed of the field at the second stator 13 the rotor 5, 9 starts to rotate. This, too, is a possible way of adjusting any desired speed of rotation of the rotors 5, 9, in spite of the synchronous mode of operation.

The speed of rotation of the rotors 5, 9 can be adjusted due to the fact that it is half the sum of the speeds of rotation of the rotational speed of the rotary field applid to the first stator 1 and of the rotary field applied to the second stator 13.

## Claims

1. A rotating electric machine comprising a stator (1) and a rotor (5) disposed opposite s id stator (1) and rotatable about an axis, and further comprising a number N of stator windings (2, 3, 4) disposed on said stator (1) on a circle round the axis at uniform distances from one another, wherein the rotor (5) has provided thereon a number N of rotor windings (6, 7, 8) disposed on a circle round the axis at uniform distances from one another and used for exciting a magnetic field, said number N of rotor windings corresponding to said number N of stator windings, wherein a second rotor (9) is connected to the first rotor (5) and rotates at the speed of rotation of the first rotor (5) about the axis thereof, wherein said second rotor (9) has provided thereon a number N of rotor windings (10, 11, 12) disposed on a circle round the axis at uniform distances from one another, said number N of rotor windings corresponding to said number N of stator windings, the first rotor winding (6) of the first rotor (5) is connected to the first rotor winding (10) of the second rotor (9), wherein further rotor windings of the first and second rotor are cross-connected so that the rotary fields at the two rotors (5, 9) have opposite directions of rotation with regard to said rotors (5, 9), wherein a second stator (13) is associated to the second rotor (9), and wherein said second stator (13) has provided thereon a number N of stator windings (14, 15, 16) disposed on a circle round the axis at uniform distances from one another, said number N of stator windings of said second stator corresponding to said number N of stator windings of said first stator,

**characterised in that**

as far as rotor windings (7, 8) other than the first rotor winding (6) are concerned, and wherein when the rotor windings of each rotor are referred to by a series of reference numbers n = 1,2 ... N, the $n^{th}$ rotor winding (7, 8) of the first rotor (5) is connected to the $(N + 2 - n)^{th}$ rotor winding (12, 9) of the second rotor (9), and characterised by a means for regulating or controlling the speed of rotation of the exciting rotary current flowing in said second stator, said means being designed such that the speed of rotation of the rotors can be continuously adjusted by adjusting the sum of the speeds of rotation of the rotary magnetic field generated by the exciting rotary current in the windings (6, 7, 8) of the first rotor (5) and of the rotary magnetic field generated by the rotary current flowing in the windings (2, 3, 4) of the first stator (1), and that the machine is used as a motor.

FIG. 1